Europäisches Patentamt

European Patent Office

Office européen des brevets

(19)

(11) Veröffentlichungsnummer : **0 474 739 B1**

(12) # EUROPÄISCHE PATENTSCHRIFT

(45) Veröffentlichungstag der Patentschrift :
28.04.93 Patentblatt 93/17

(51) Int. Cl.$^5$ : **G11B 33/04**

(21) Anmeldenummer : **90908949.2**

(22) Anmeldetag : **29.05.90**

(86) Internationale Anmeldenummer :
**PCT/EP90/00859**

(87) Internationale Veröffentlichungsnummer :
**WO 90/15411 13.12.90 Gazette 90/28**

(54) **VERPACKUNGSEINHEIT FÜR COMPACT-DISC-SCHALLPLATTEN U. DGL.**

(30) Priorität : **29.05.89 DE 8906570 U**

(43) Veröffentlichungstag der Anmeldung :
**18.03.92 Patentblatt 92/12**

(45) Bekanntmachung des Hinweises auf die
Patenterteilung :
**28.04.93 Patentblatt 93/17**

(84) Benannte Vertragsstaaten :
**AT BE CH DE DK ES FR GB IT LI LU NL SE**

(56) Entgegenhaltungen :
EP-A- 114 631
EP-A- 269 159
DE-U- 8 703 616
DE-U- 8 708 417
DE-U- 8 810 917
NL-A- 8 001 570
US-A- 4 327 831

(73) Patentinhaber : **Dunker, Petra**
**Bismarckstrasse 50**
**W-4030 Ratingen 6 (DE)**
Patentinhaber : **PETZ, Heinz**
**Grünewalder Berg 16**
**W-5600 Wuppertal (DE)**

(72) Erfinder : **Dunker, Petra**
**Bismarckstrasse 50**
**W-4030 Ratingen 6 (DE)**
Erfinder : **PETZ, Heinz**
**Grünewalder Berg 16**
**W-5600 Wuppertal (DE)**

(74) Vertreter : **Schumacher, Horst, Dr. Dipl.-Phys.**
**et al**
**Frühlingstrasse 43 (Ecke Holunderweg)**
**W-4300 Essen 1 (DE)**

**Beschreibung**

Die Erfindung betrifft eine Verpackungseinheit für zwei scheibenförmige Gegenstände, insbesondere für zwei Compact-Disc-Schallplatten, mit einem aus einem Deckelteil und einem Bodenteil bestehenden Gehäuse, bei dem Deckelteil und Bodenteil gelenkig miteinander verbunden sind.

Zur Verpackung von Compact-Disc-Schallplatten gibt es diverse gebräuchliche Verpackungseinheiten. Als Einzelverpackung, d. h. als Verpackung für eine einzige Compact-Disc-Schallplatte am bisher meisten verbreitet ist eine Verpackungseinheit mit aus einem Deckelteil und einem damit gelenkig verbundenen Bodenteil bestehenden Gehäuse aus klarsichtigem Kunststoff, in das ein sogenanntes Trace eingesetzt und am Bodenteil verrastet ist. Das Trace dient als Tragelement für eine einzige Compact-Disc-Schallplatte und ist üblicherweise aus einem gefärbten Kunststoff hergestellt. Zwischen dem Trace und der annähernd quadratischen Grundfläche des Bodenteils aus Klarsichtmaterial - also unterhalb der - auf dem Tragelement (dem Trace) festklemmbare Compact-Disc-Schallplatte ist üblicherweise ein einseitig bedrucktes Blatt Papier od. dgl. eingelegt, welches auf der Sichtseite des Bodens als sogenannte Inlaycard (Cover) dient. Dieser Teil der Verpackung ist im normalen Gebrauch nicht zugänglich.

Demgegenüber ist das klarsichtige Deckelteil auf seiner Innenseite mit kleinen, einander in der Regel parallel gegenüberliegend angeordneten Randführungen zur Aufnahme eines sogenannten "Booklet" versehen. Bei in dem Deckel eingeschobenem Booklet ist dessen "Coverseite" aufgrund des klarsichtigen Deckelteiles voll sichtbar. Das Booklet kann für das Studium in ihm enthaltenen Informationen dem Deckelteil entnommen werden.

Damit bei einer Verpackungseinheit für zwei (statt einer) Compact-Disc-Schallplatten der gleiche Bedienungskomfort und Umfang an Werbe- und/oder Informationsfläche in Form von Inlaycardseiten (Coverseiten) und Bookletseiten realisierbar ist, ist es gebräuchlich, in das Gehäuse zwischen Boden- und Deckelteil ein besonderes Tragteil anzuordnen, das an dem aufgeklappten Deckelteil und Bodenteil wie eine Seite eines Buches durch je ein Paar von Gelenken befestigt ist, wobei Boden- und Deckelteil die "Buchdeckel" bilden und der "Buchrücken" die Gelenke für die zueinander bewegten Elemente aufnimmt EP-A1-0 114 631. Diese bekannten Verparkungseinheiten für zwei Compact-Disc-Schallplatten sind kompliziert in ihrem Aufbau und daher nur mit relativ großem Aufwand herstellbar und benötigen zudem etwa doppelt so viel Platz wie die weiter oben beschriebenen, für einzelne Compact-Disc -Schallplatten gebräuchlichen Verparkungseinheiten.

Der Erfindung liegt nun die **Aufgabe** zugrunde, eine Verpackungseinheit mit den eingangs beschriebenen (gattungsgemäßen) Merkmalen so auszugestalten, daß sie mit besonders wenig Aufwand herstellbar ist und trotz geringen Platzbedarfes hinsichtlich ihrer Nutzungsmöglichkeiten den Verparkungen für zwei Compact-Disc-Schallplatten (Doppelverpackungen) so gut wie in nichts nachsteht, d.h. daß auf eine Inlaycard oder Booklet nicht verzichtet werden muß

Zur **Lösung** dieser Aufgabe wird eine Verpackungseinheit mit den Merkmalen des Patentanspruchs 1 vorgeschlagen.

Die erfindungsgemäße Verparkungseinheit hat u. a. folgende Vorteile:
- es können zwei Coverseiten sowie - falls gewünscht - auch ein Booklet in praktisch gleicher Größe wie bei den eingangs beschriebenen bekannten Einzelverpackungen untergebracht werden;
- der Raumbedarf ist genau so groß wie bei den eingangs beschriebenen, am weitesten verbreiteten Einzelverpackungen für Compact-Disc-Schallplatten, so daß die bekannten Präsentationsmöbel und "Plattenständer", wie sie im kommerziellen und privaten Bereich gebräuchlich sind, unverändert weiterbenutzt werden können;
- der Herstellungsaufwand für die erfindungsgemäße Doppelverpackung ist nur ganz geringfügig größer als derjenige für die eingangs erwähnte Einzelverparkung.

Die erfindungsgemäßen Tragelemente weisen vorteilhafterweise jeweils mindestens eine Distanzauflage und jeweils mindestens einen Ringsteg für eine schonende Lagerung und einen schonenden Transport der CDs auf (Ansprüche 2 und 3), wie sie von den bekannten Verparkungseinheiten her an sich bereits bekannt sind.

Wenn zumindest eines der Tragelemente, vorzugsweise das im Deckelteil verankerte Tragelement Durchbrechungen nach Anspruch 4 aufweist, wird dadurch das weiter unten noch beschriebene Einschieben eines Covers oder eines Booklets zwischen dem Tragelement und der Stirnfläche (Grundfläche) des Bodenteils bzw. Oerkelteils erleichtert. Oerartige Durchbrechungen vermindern darüber hinaus das Gewicht und den Materialaufwand für die Verparkungseinheit und erleichtern das automatisierte Einsetzen des Tragelementes in das Deckelteil bzw. das Bodenteil - vor allem dann, wenn bereits eine CD auf das Tragelement aufgesetzt worden ist, bevor das Tragelement in das Gehäuse eingesetzt und dort verankert wird, nachdem zuvor die Inlaycard und/oder das Booklet in das Bodenteil bzw. das Deckelteil eingelegt worden ist.

Besonders vorteilhaft sind Tragelemente aus klarsichtigem Kunststoff, da sie bei fortgenommener CD den Blick auf die Rückseite des eingeschobenen Covers oder Booklets freigeben (Anspruch 10).

Randausnehmungen in zumindest einem der Tragelemente, insbesondere Randausnehmungen mit halbkreisförmiger Grundfläche erleichtern die Entnahme und das Einschieben eines Booklets oder Covers, welches zwischen dem Tragelement und dem zugehörigen Deckelteil bzw. Bodenteil einschiebbar ist (Anspruch 5).

An zumindest einem, insbesondere an dem deckelseitigen Tragelement vorgesehene Längsstege nach Anspruch 6, die sowohl durchgehend als auch abschnittsweise ausgebildet sein können, dienen als Distanzhalter zu der Grundfläche des Deckelteils bzw. des Bodenteils, so daß ein über die gesamte Grundfläche gleichmäßig hoher Zwischenraum als Aufbewahrungsraum für ein Cover bzw. ein Booklet aufrechterhalten wird und insbesondere ein wiederholtes Entnehmen bzw. Einschieben des Covers oder Booklets in einfacher Weise möglich ist.

Eine erfindungsgemäße Verpackungseinheit besteht also aus vier Grundelementen, dem Bodenteil, dem Deckelteil und den beiden Tragteilen. Diese Grundelemente werden in aller Regel zunächst als Einzelteile hergestellt und müssen dann zusammengefügt werden. Natürlich ist es grundsätzlich möglich, diese vier Grundelemente nach Art einer Abwicklung aus einem Stück zu fertigen, wobei die einzelnen Grundelemente durch leichtgängige Scharnierbänder od. dgl. aus demselben Material miteinander gelenkig verbunden sein können. In jedem Fall ist es aber notwendig, die Tragelemente im Bodenteil und im Deckelteil zu verankern. Dies kann grundsätzlich durch Kleben oder Schweißen geschehen, vorzugsweise geschieht dies aber durch Verrasten mittels miteinander korrespondierender Rastmittel an den Tragelementen (nach Anspruch 7) und am Boden- bzw. Deckelteil.

Durch an den Tragelementen vorgesehene Distanzauflagen, die zum Verpackungsinneren hin wirksam sind (nach Anspruch 8), wird sichergestellt, daß die beiden Tragelemente einen vorgegebenen Mindestabstand voneinander nicht unterschreiten können. Hierdurch werden die bei geschlossener Verpackung relativ nahe zusammenliegenden CDs vor gegenseitiger Berührung und Beschädigung verschont.

Besonders bevorzugt werden solche erfindungsgemäße Verpackungseinheiten, bei denen ein Bodenteil, ein Deckelteil und ein Trace wie bei den eingangs genannten Einzelverpackungen - sogar mit identischen Abmessungen - vorgesehen ist, wobei das Trace als bodenseitiges Tragelement dient und bei der in dem Deckelteil ein erfindungsgemäßes Tragelement verankert ist (Anspruch 11). Grundsätzlich ist es sogar möglich, die eingangs erwähnten Einzelverpackungen mit einem Tragelement für eine weitere CD nachzurüsten, wobei dieses Tragelement in diesem Deckelteil durch Einrasten (vorzugsweise an den Halteelementen für das Booklet) verankerbar ist. Der Gegenstand der Erfindung bezieht sich also auch auf derart nachgerüstete Verpackungseinheiten bzw. die hierfür erforderlichen Nachrüstteile. Erfindungsgemäße Tragelemente können also in die für herkömmliche Einzelverpackungen verwendeten Gehäuse eingesetzt werden, was die Produktionskosten weiterhin senkt.

Die erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der - beispielhaft - ein bevorzugtes Ausführungsbeispiel einer erfindungsgemäßen Verpackungseinheit dargestellt ist. In der Zeichnung zeigen:

Fig. 1    von einer erfindungsgemäßen Verpackungseinheit das in dem Deckelteil verankerbare Tragelement mit angedeuteter eingesetzter CD in Innenansicht (Ansicht A gemäß Fig. 3), aber ohne Deckelteil;

Fig. 2    von demselben Tragelement wie in Fig. 1 eine Seitenansicht (Ansicht B gemäß Fig. 1);

Fig. 3    von demselben Tragelement eine weitere Seitenansicht (Ansicht C gemäß Fig. 1 und 2)mit gestrichelt dargestelltem Deckelteil, in welchem das Tragelement verankert ist;

Fig. 4    für dieselbe Verpackungseinheit das Tragelement für das Bodenteil in Innenansicht (Ansicht D gemäß Fig. 5 mit eingelegter CD, aber ohne Bodenteil) sowie

Fig. 5    von derselben Verpackungseinheit das Tragelement für das Bodenteil (gemäß Fig. 4) in Seitenansicht (Ansicht E gemäß Fig. 4 mit gestrichelt angedeutetem Bodenteil sowie gestrichelt angedeutetem Deckelteil mit darin verankertem Tragelement und zwei eingesetzten CDs).

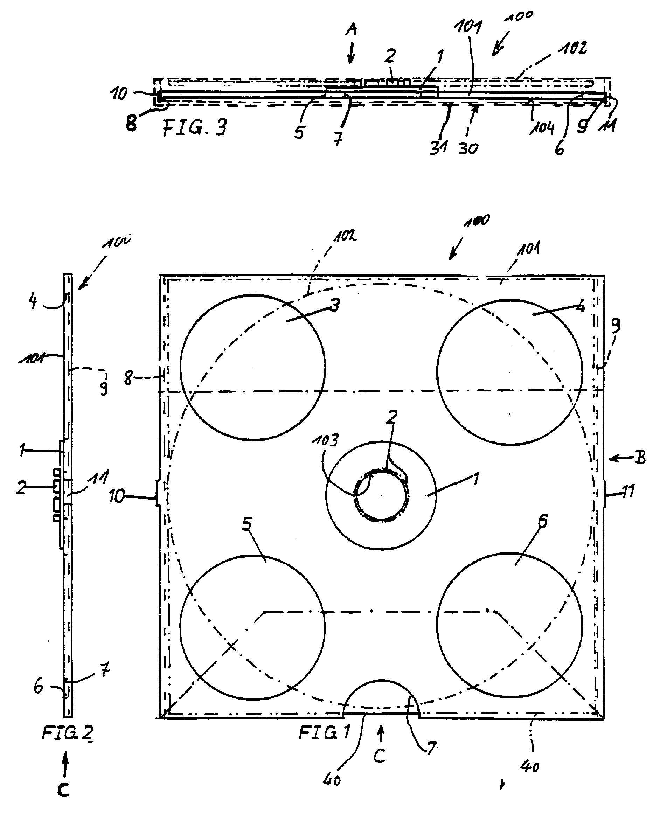

Das in Fig. 1 bis 3 dargestellte Tragelement 100 für das Deckelteil 30 einer insgesamt mit 300 gekennzeichneten Verpackungseinheit (siehe Fig. 5) besteht aus einem klarsichtigen Spritzgußkunststoffteil mit einer im Grundriß etwa quadratischen Grundplatte 101 mit einer zentrischen kreisrunden Distanzauflage 1 für eine CD 102, welche von einem an sich bekannten segmentartig gebildeten Ringsteg 2, welcher ein geringes Übermaß im Außendurchmesser im Vergleich zu der mittigen kreisförmigen Durchbrechung 103 der CD aufweist, festgehalten wird und problemlos aus dieser Halteposition entnommen und in diese wieder rückgesteckt werden kann. Auf diese Weise wird die CD 102 in ihrem berührungsempfindlichen Oberflächenbereich auf Distanz von der Grundplatte 101 gehalten. Die Grundplatte 101 weist vier symmetrisch angeordnete kreisrunde Durchbrechungen 3 bis 6 auf, welche die CD 102 sichelförmig in Radialrichtung überragen. An zwei gegenüberliegenden Seitenrändern der Grundplatte 101 sind Rastnasen 10, 11 angeordnet, die ein rastendes Verankern im Deckelteil 30 in korrespondierenden Rastausnehmungen ermöglicht. Um nun zu erreichen, daß zwischen der der CD gegenüberliegenden Oberfläche der Grundplatte 101 ein Abstandsspalt 104 (siehe Fig. 3) zur Innenseite der Grundplatte 31 des Deckelteils aufrechterhalten wird, um ein in Fig. 1 strichdoppelpunktiert angedeutetes Booklet 40 mit durch die Grundplatte 31 sichtbarer Coverseite entnehmbar einschieben zu können, ist die Grundplatte 101 an zwei einander gegenüberliegenden Rändern mit je einem zur Deckelinnenseite hinweisenden Längssteg 8 und 9 versehen. Eine halbkreisförmige Randausnehmung 7 erleichtert den Zugriff zum Booklet 40. Das Einschieben und Herausziehen des Booklet oder der Inlaycard kann aber noch weiter erleichtert werden, wenn nämlich das Tragelement 100 bzw. 200 bzw. beide Tragelemente nicht die gesamte Grundrißfläche des Deckel- bzw. Bodenteils einnehmen, sondern in einer Abmessung (Breite oder Länge) ganz oder teilweise schmaler sind als die Abmessung des zugehörigen Grundrisses von Deckel- oder Bodenteil (siehe - beispielhaft - die doppelstrichpunktierten Begrenzungslinien in Fig. 1).

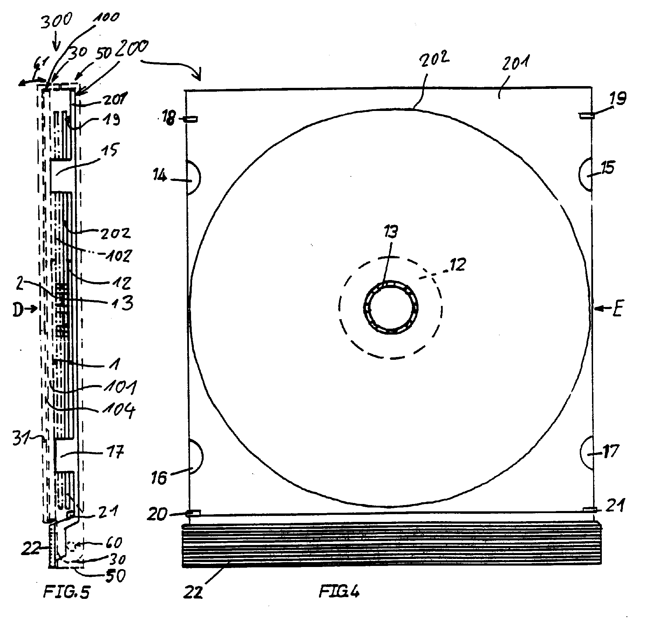

Das in Fig. 4 dargestellte, insgesamt mit 200 bezeichnete Tragelement für das Bodenteil 50 (siehe Fig. 5) der Verpackungseinheit 300, ist wie das sogenannte Trace der allgemein gebräuchlichen Einzelverpackungen für CDs ausgestaltet. Es weist eine ebene Grundplatte 201 auf, ist mit einer zentrischen Distanzauflage 12 sowie einem segmentförmig ausgestalteten Ringsteg 13 zur entnehmbaren Aufnahme einer CD 202 versehen, weist Rastnasen 18 bis 21 zum rastenden Verankern im Bodenteil 50 auf und ist ferner mit Distanzauflagen 14 bis 16 sowie einem Abschlußsteg 22 versehen, wobei die Distanzauflagen 14 bis 17 so hoch über die Grundplatte 201 hinausragen, daß sie, wie aus Fig. 5 ersichtlich, bei geschlossener Verpackungseinheit an der gehäuseinnenseitigen Oberfläche der Grundplatte 101 des Deckelteils 30 verankerten Tragelementes 100 zur Anlage kommen, um mit Sicherheit den zwischen den beiden CDs 102 und 202 erforderlichen Oberflächenabstand stets aufrecht zu erhalten. Diese Distanzfunktion kann auch von den Ringstegen 2 und 13 übernommen oder unterstützt werden, indem sich diese Ringstege bei geschlossener Verpackungseinheit stirnseitig berühren.

Wie aus Fig. 5 ersichtlich, sind das Deckelteil 30 und das Bodenteil 50 mittels eines Scharnieres 60 schwenkbar aneinandergelenkt, so daß das Deckelteil 30 bezüglich des Bodenteiles 50 z. B. um etwa 180° verschwenkbar gelagert ist (siehe Doppelpfeile 61).

In der in Fig. 5 dargestellten Verankerungsposition des Tragelementes 200 im Bodenteil 50 liegen die einander zugewandten Grundrißflächen von Bodenteil und Tragelement mit gewissem Spiel voneinander entfernt, so daß zwischen beiden eine Inlaycard (Cover) eingelegt und festgeklemmt werden kann. Aus Gründen der Übersichtlichkeit ist diese Inlaycard in Fig. 5 aber nicht eigens dargestellt.

EP 0 474 739 B1

**Bezugszeichenliste:**

| | |
|---|---|
| 1 | Distanzauflage |
| 2 | Ringsteg |
| 3 | Durchbrechung |
| 4 | Durchbrechung |
| 5 | Durchbrechung |
| 6 | Durchbrechung |
| 7 | Randausnehmung |
| 8 | Längssteg |
| 9 | Längssteg |
| 10 | Rastnase |
| 11 | Rastnase |
| 12 | Distanzauflage |
| 13 | Ringsteg |
| 14 | Distanzauflage |
| 15 | Distanzauflage |
| 16 | Distanzauflage |
| 17 | Distanzauflage |
| 18 | Rastnase |
| 19 | Rastnase |
| 20 | Rastnase |
| 21 | Rastnase |
| 22 | Abschlußsteg |
| 30 | Deckelteil |
| 31 | Grundplatte |
| 40 | Booklet |
| 50 | Bodenteil |
| 60 | Scharnier |
| 61 | Doppelpfeil |
| 100 | Tragelement |
| 101 | Grundplatte |
| 102 | CD |
| 103 | Durchbrechung |

| | |
|---|---|
| 104 | Abstandsspalt |
| 200 | Tragelement |
| 201 | Grundplatte |
| 202 | CD |
| 300 | Verpackungseinheit |

| | |
|---|---|
| A | Ansicht |
| B | Ansicht |
| C | Ansicht |
| D | Ansicht |
| E | Ansicht |

**Patentansprüche**

1. Verpackungseinheit für zwei scheibenförmige Gegenstände, insbesondere für zwei Compact-Disc-Schallplatten (102 und 202), mit einem aus einem Deckelteil (30) und einem Bodenteil (50) bestehenden Gehäuse, bei dem Deckelteil und Bodenteil gelenkig miteinander verbunden sind,

5

**dadurch gekennzeichnet, daß**

zwei vorzugsweise aus Plastikmaterial oder wahlweise aus Kartonmaterial bestehende Tragelemente (100, 200) für je einen Scheibenförmigen Gegenstand (102 bzw. 202) vorgesehen und in dem auf ein Mittelteil verzichtenden Gehäuse im Deckelteil (30) bzw. im Bodenteil (50) verankert bzw. verankerbar sind und mittels Distanzhaltern (8,9) zwischen mindestens einem der Tragelemente (100, 200) und der Grundfläche des Deckel - bzw. des Bodenteils ein über die gesamte Grundfläche gleichmäßig hoher Zwischenraum als Aufbewahrungsraum vorgesehen ist..

2. Verpackungseinheit nach Anspruch 1, dadurch gekennzeichnet, daß die Tragelemente (100, 200) jeweils mindestens eine Distanzauflage (1, 12) aufweisen.

3. Verpackungseinheit nach Anspruch 1 oder 2, dadurch gekennzeichnet, daß die Tragelemente (100, 200) jeweils einen Ringsteg (2, 13) aufweisen, die mit einem geringen Übermaß im Durchmesser im Vergleich mit der mittigen, kreisförmigen Durchbrechung des Scheibenförmigen Gegenstandes versehen sind.

4. Verpackungseinheit nach einem der Ansprüche 1 bis 3, dadurch gekennzeichnet, daß mindestens eines der Tragelemente (100, 200) mehrere, vorzugsweise vier, insbesondere kreisförmige, Durchbrechungen (3 bis 6) aufweist.

5. Verpackungseinheit nach einem der Ansprüche 1 bis 4, dadurch gekennzeichnet, daß zumindest eines der Tragelemente mindestens eine, vorzugsweise halbkreisförmige, Randausnehmung (7) aufweist.

6. Verpackungseinheit nach einem der Ansprüche 1 bis 5, dadurch gekennzeichnet, daß mindestens eines der Tragelemente (100, 200) zwei, insbesondere randseitig oder randnahe, vorzugsweise parallel zueinander angeordnete, Längsstege (8, 9) als Distanzhalter zu der Grundfläche des Deckel - bzw. Bodenteils aufweist.

7. Verpackungseinheit nach einem der Ansprüche 1 bis 6, dadurch gekennzeichnet, daß zumindest eines der Tragelemente (100, 200) Rastelemente, insbesondere zwei Noppen (Rastnasen 10 und 11) bzw. vier Noppen (Rastnasen 18 bis 21) aufweist.

8. Verpackungseinheit nach einem der Ansprüche 1 bis 7, dadurch gekennzeichnet, daß zumindest eines der Tragelemente (100, 200) vorzugsweise vier, Distanzauflagen (14 bis 17), insbesondere halbkreisförmige Noppen aufweist.

9. Verpackungseinheit nach einem der Ansprüche 1 bis 8, dadurch gekennzeichnet, daß vorzugsweise eines der Tragelemente (100, 200) einen Abschlußsteg (22) aufweist.

10. Verpackungseinheit nach einem der Ansprüche 1 bis 9, dadurch gekennzeichnet, daß zumindest eines der Tragelemente (100, 200) durchsichtig ist.

11. Verpackungseinheit nach einem der Ansprüche 1 bis 10, dadurch gekennzeichnet, daß das Bodenteil mit einem an sich bekannten Tragelement (200) ausgestattet ist und im Deckelteil ein, vorzugsweise die annähernd gleiche Grundfläche wie das Deckelteil aufweisendes Tragelement (100) verankert ist.

12. Verpackungseinheit nach einem der Ansprüche 1 bis 11, dadurch gekennzeichnet, daß zwischen mindestens einem Tragelement (100 bzw. 200) und dem zugehörigen Deckelteil (30) bzw. Bodenteil (50) ein Abstandsspalt (104) zur Aufnahme eines Booklets (40) oder einer flachen Inlaycard (Cover) aufweist und das Booklet oder die Inlaycard in diesen Abstandsspalt entnehmbar einschiebbar ist.

## Claims

1. Packaging unit for two disc-shaped objects, in particular for two compact discs (102 and 202), with a housing that consists of a lid portion (30) and a base portion (50) that are connected with each other in a hinge-like manner, characterized by the fact that one support element (100,200), preferably consisting of a plastic material or possibly of cardboard material, is provided for each disc-shaped object (102 or 202), in which the support elements are attached or can be attached respectively in the lid portion (30) and the base portion (50) of said housing that is not provided with a central element and an equally high space over the entire base surface as a storage area is provided between at least one of the support elements (100,200) and the base surface of the lid or base portion by means of spacers (8,9).

2. Packaging unit according to Claim 1,
characterized by the fact that each of the support elements (100,200) is provided with at least one distance support (1,12).

3. Packaging unit according to Claim 1 or 2,
characterized by the fact that the support elements (100,200) are provided with a ring web (2,13) that has a slightly larger diameter than the central circular perforation in the disc-shaped object.

4. Packaging unit according to one of the Claims 1 to 3, characterized by the fact that at least one of the support elements (100,200) is provided with several, preferably four, circular perforations (3 to 6).

5. Packaging unit according to one of the Claims 1 to 4, characterized by the fact that at least one of the support elements is provided with at least one, preferably semicircular- shaped,edge recess (7).

6. Packaging unit according to one of the Claims 1 to 5, characterized by the fact that at least one of the support elements (100,200) is provided with two longitudinal webs (8,9) as spacers for the base surface of the lid or base portion which are preferably arranged on the edge or close to the edge, preferably parallel to each other.

7. Packaging unit according to one of the Claims 1 to 6, characterized by the fact that at least one of the support elements (100,200) is provided with catch brackets, in particular two naps (catch brackets 10 and 11) or four naps (catch brackets 18 to 21).

8. Packaging unit according to one of the Claims 1 to 7, characterized by the fact that at least one of the support elements (100,200) is provided with,preferably four, distance supports (14 to 17), in particular semicircular-shaped naps.

9. Packaging unit according to one of the Claims 1 to 8, characterized by the fact that preferably one of the support elements (100,200) is provided with an end web (22).

10. Packaging unit according to one of the Claims 1 to 9, characterized by the fact that at least one of the support elements (100,200) is transparent.

11. Packaging unit according to one of the Claims 1 to 10, characterized by the fact that the base portion is equipped with a conventional support element (200) and a support element (100), which preferably has an approximately equal base surface as the lid portion, is attached in the lid portion.

12. Packaging unit according to one of the Claims 1 to 11, characterized by the fact that a distance gap (104) which serves as a receptacle for a booklet (40) or a flat inlay-card (cover) is arranged between a support element (100 or 200) and the corresponding lid portion (30) or base portion (50) and that the booklet or the inlay-card can be inserted into this distance gap in a removable manner.

**Revendications**

1. Unité de conditionnement pour deux objets en forme de disque, en particulier pour deux disques compacts (102 et 202), avec un boîtier consistant en une partie couvercle (30) et une partie fond (50) dans lequel la partie couvercle et la partie fond sont reliées entre elles par une articulation,
caractérisée par le fait que
deux éléments-supports de préférence en matière plastique ou au choix en carton (100, 200) sont prévus pour respectivement un objet en forme de disque (102 resp. 202) et sont ancrés ou ancrables dans la partie couvercle (30) resp. dans la partie fond (50) du boîtier n'ayant pas de partie centrale et qu'un espace de même hauteur sur toute la surface de base et formé au moyen d'écarteurs (8, 9) entre au moins l'un des éléments-supports (100, 200) et la surface de base de la partie couvercle resp. de la partie fond est prévu comme compartiment de stockage.

2. Unité de conditionnement selon la revendication 1, caractérisée par le fait que les éléments-supports (100, 200) présentent respectivement au moins une patte d'écartement (1, 12).

3. Unité de conditionnement selon la revendication 1 ou 2, caractérisée par le fait que les éléments-supports (100, 200) présentent respectivement un listel annulaire (2, 13) ayant un diamètre légèrement supérieur à celui de l'ouverture circulaire centrale de l'objet en forme de disque.

4. Unité de conditionnement selon l'une des revendications 1 à 3, caractérisée par le fait qu'au moins l'un des éléments-supports (100, 200) présente plusieurs, de préférence quatre, ouvertures surtout circulaires (3 à 6).

5. Unité de conditionnement selon l'une des revendications 1 à 4, caractérisée par le fait qu'au moins l'un des éléments-supports présente au moins un rebord (7), de préférence en demi-cercle.

6. Unité de conditionnement selon l'une des revendications 1 à 5, caractérisée par le fait qu'au moins l'un des éléments-supports (100, 200) présente deux listels longitudinaux (8, 9), en particulier sur les bords ou à proximité des bords, disposés de préférence parallèlement l'un à l'autre, formant des écarteurs par rapport à la surface de base de la partie couvercle resp. de la partie fond.

7. Unité de conditionnement selon l'une des revendications 1 à 6, caractérisée par le fait qu'au moins l'un des éléments-supports (100, 200) présente des éléments d'encliquetage, en particulier deux nopes (taquets encliquetables 10 et 11) resp. quatre nopes (taquets encliquetables 18 à 21).

8. Unité de conditionnement selon l'une des revendications 1 à 7, caractérisée par le fait qu'au moins l'un des éléments-supports (100, 200) présente de préférence quatre pattes d'écartement (14 à 17), en particulier des nopes semi-circulaires.

9. Unité de conditionnement selon l'une des revendications 1 à 8, caractérisée par le fait que l'un des éléments-supports (100, 200) présente de préférence un listel de fermeture (22).

10. Unité de conditionnement selon l'une des revendications 1 à 9, caractérisée par le fait qu'au moins l'un des éléments-supports (100, 200) est transparent.

11. Unité de conditionnement selon l'une des revendications 1 à 10, caractérisée par le fait que la partie fond est pourvue d'un élément-support connu en soi (200) et qu'un élément-support (100) présentant de préférence approximativement la même surface de base que la partie couvercle est ancré dans la partie couvercle.

12. Unité de conditionnement selon l'une des revendications 1 à 11, caractérisée par le fait qu'une fente (104) destinée à recevoir un booklet (40) ou une inlaycard plate (cover) est formée entre au moins un élément-support (100 resp. 200) et la partie couvercle (30) resp. la partie fond (50) y afférent et que le booklet ou l'inlaycard peut être inséré dans cette fente d'écartement et en être sorti.

FIG. 3

FIG. 2

FIG. 1

FIG.5

FIG.4